Europäisches Patentamt

European Patent Office

Office européen des brevets

(19)

(11) Veröffentlichungsnummer: **0 088 104**
**B1**

(12) **EUROPÄISCHE PATENTSCHRIFT**

(45) Veröffentlichungstag der Patentschrift:
15.01.86

(21) Anmeldenummer: **82902724.2**

(22) Anmeldetag: **04.09.82**

(86) Internationale Anmeldenummer:
**PCT/EP 82/00193**

(87) Internationale Veröffentlichungsnummer:
**WO 83/00798 (17.03.83 Gazette 83/07)**

(51) Int. Cl.⁴: **A 01 K 61/00**

(54) **VORRICHTUNG ZUR AUFZUCHT VON AALEN, KREBSEN UND ANDEREN BODENBEWOHNENDEN WASSERORGANISMEN.**

(30) Priorität: **09.09.81 DE 3135653**

(43) Veröffentlichungstag der Anmeldung:
**14.09.83 Patentblatt 83/37**

(45) Bekanntmachung des Hinweises auf die Patenterteilung:
**15.01.86 Patentblatt 86/3**

(84) Benannte Vertragsstaaten:
**FR GB SE**

(56) Entgegenhaltungen:
**DE-A-2 753 074**
**FR-A-522 252**
**FR-A-2 199 438**
**GB-A-2 033 191**

(73) Patentinhaber: **Pohlhausen, Henn, Dr.,
Friedrichstrasse 56, D-2110 Buchholz/Nordheide
(DE)**

(72) Erfinder: **Pohlhausen, Henn, Dr., Friedrichstrasse
56, D-2110 Buchholz/Nordheide (DE)**

(74) Vertreter: **Schupfner, Gerhard D., Müller,
Schupfner & Gauger Karlstrasse 5 Postfach 14
27, D-2110 Buchholz/Nordheide (DE)**

EP 0 088 104 B1

## Beschreibung

Die Erfindung bezieht sich auf eine Vorrichtung zur Aufzucht von bodenbewohnenden Wasserorganismen mit einem die Wasserorganismen aufnehmenden, mit Wasser angefüllten Behälter, oberhalb dessen Boden Schlupfaufnahmen vorgesehen sind, in die an ihren Kopfenden Frischwasser einströmt und die an ihren rückwärtigen Enden mit das Entweichen der Wasserorganismen verhindernden baulichen Anordnungen versehen sind.

Es ist bekannt, in der kommerziellen Warmwasser-Aalaufzucht Aale z. B. in Langstrombecken mit Endablaufsieb zu züchten. Solche Langstrombecken sind aber ungeeignet, da die Aale als bodenlebende Fische dort ständig in einem Gemisch aus Wasser, Kot und Futterresten am Boden leben müssen. Die Reinigung der Becken und insbesondere des Ablaufsiebes führt für die Tiere zu einer sehr starken Belastung. Kranke und tote Tiere lassen sich praktisch nicht entfernen, ohne das ganze Becken abzulassen (Arbeiten des Deutschen Fischereiverbandes, Heft 30, 1980, von H. Kuhlmann, Seite 74). Auch in einer neueren Studie (Niedersächsische Landesentwicklungsgesellschaft m.b.H., Hannover, 1979, unter dem Titel "Aalfütterungsanlage - Vorbereitungsstufe") ist das Aalaufzuchtproblem nicht gelöst. Dort wird wieder von Flachböden mit deren Nachteilen ausgegangen und darüber hinaus mit zu starkem Wasserdurchsatz gearbeitet. Mit den bekannten Aufzuchtmethoden kommt es zu einer relativ sehr geringen Besatzdichte von 15 kg pro Quadratmeter Wasserfläche oder 37,5 kg pro Kubikmeter Wasser für den wenig sauerstoffbedürftigen, also widerstandsfähigen Aal (Nileg-Studie, 1979, Seiten 6 und 24). Demgegenüber ist es bei der wesentlich sauerstoffbedürftigeren, also empfindlicheren, freiwasserlebenden Forelle möglich, Besatzdichten von 100 kg pro Kubikmeter bis 167 kg pro Kubikmeter Wasser zu erreichen (H. Keesen: Aufbau und Funktion einer Züchtungsbatterie mit umlaufendem Wasser für die Aufzucht von Forellensetzlingen; Arbeiten des Deutschen Fischereiverbandes, Heft 19, 1976). Die wesentlich anspruchsvollere Forelle läßt also 2,5- bis 4,5-mal größere Besatzdichten pro Kubikmeter Wasser zu, obwohl zu erwarten wäre, daß der Aal ähnlich wie beim Transport auch bei der Aufzucht erheblich höhere Besatzdichten vertragen müßte als die Forelle, da der Sauerstoffbedarf der Forelle etwa 3,4-mal höher ist als der des Aales. Es ist also davon auszugehen, daß die Unterbringung der Aale in den bekannten Aufzuchtanlagen nicht verhaltensgerecht ist und das Produktionspotential des Aales nicht voll zur Entfaltung kommen läßt.

In den Arbeiten von Kuhlmann ""Neue Technik zur Haltung und Anfütterung von Glasaalen", Arbeiten des Deutschen Fischereiverbandes, Heft 30, 1980, ist eine Aufzuchtvorrichtung beschrieben, bei der der Aal vom Boden weg auf Drahtgestelle in das Freiwasser gelockt ist. Dabei betrachten sich die Aale offenbar gegenseitig als Bodensubstrat und knäulen sich dicht zusammen. Mit dieser neuen Technik ist gegenüber früheren Verfahren ein bis um 50% besseres Abwachsergebnis möglich bei gleichzeitig höherer Besatzdichte und Wasserausnutzung. Auch diese Ergebnisse sind gegenüber der Besatzdichte von Forellen aber noch nicht befriedigend.

Weiterhin ist es aus der DE-A-27 53 074 bekannt, zur Aufzucht von Aalen in einem Behälter Wellplatten übereinander zu legen, die dann zwischen sich eine Vielzahl von annähernd zylindrischen rohrförmigen horizontalen Schlupfaufnahmen bilden. Diese Schlupfaufnahmen liegen als Bündel unter der Wasseroberfläche. Das Frischwasser tritt an Ablageflächen eine heraushebbaren Futtereinrichtung vorbei in die Schlupfaufnahmen ein und verläßt diese nach dem Durchfließen mehrerer hintereinander angeordneter Bündel an einem heraushebbaren Gitter, das die Aale an einem Verlassen nach hinten hindert, sobald diese groß genug geworden sind. Das verschmutzte Wasser wird weggeleitet oder gereinigt und wieder der Futtereinrichtung vor den Kopfseiten zugeführt. Für die Lebensgewohnheiten der Aale ist diese Haltungsart nicht günstig. Liegen mehrere Schlupfaufnahme-Bündel hintereinander, dann erhalten die nachfolgenden Bündel bereits verschmutztes Wasser.

Es ist Aufgabe der Erfindung, eine Vorrichtung zur Aufzucht von Aalen, Krebsen und anderen höhlen- und bodenbewohnenden Wasserorganismen zu schaffen, die bei hoher Besatzdichte stets sauberes und sauerstoffreiches, gegebenenfalls warmes Atemwasser zur Verfügung stellt.

Die Lösung der gestellten Aufgabe ist erfindungsgemäß dadurch gekennzeichnet, daß die Schlupfaufnahmen, die rohrförmig oder dergl. ausgebildet sind, mit ihren Kopfenden an einen Trägerboden münden und befestigt sind, der innerhalb des Behälters einen Frischwassertrakt von einem Schmutzwassertrakt trennt, womit die Schlupfaufnahmen unmittelbar von der vom Frischwasser versorgten Seite des Trägerbodens aus in das Wasser des Schmutzwassertraktes geführt sind, und daß die schmutzwasserseitigen Enden der einzelnen Schlupfaufnahmen zum Verhindern des Entweichens der Wasserorganismen mit Verengungen versehen sind.

Die Erfindung ist im Patentanspruch 1 definiert, und die Unteransprüche beziehen sich auf die bevorzugten Merkmale der Erfindung. Durch die Bereitstellung der den Lebensgewohnheiten angepaßten Schlupfaufnahmen wird eine streßfreiere Aufzucht bei geringerer Krankheitsgefährdung und erheblich höherer Besatzdichte und damit rationeller Ausnutzung des Wassers möglich.

Insbesondere bei der Weitermast aus freien Gewässern stammender Wildaale ist eine verhaltensgerechte Unterbringung z. B. zum Zwecke des Abbaues etwaiger Quecksilberbestandteile notwendig, da eine Haltung in den oben geschilderten, bisher bekannten Anlagen erfolglos geblieben ist und selbst im Falle eines evtl. Gelingens zu teuer würde.

Zur Aufzucht von Aalen werden die Schlupfplätze aus Röhren bestehen, die sich in der Regel und bevorzugt schräg nach oben erstrecken. Zur Aufzucht von Krebsen bestehen die Schlupfaufnahmen aus in der Regel und bevorzugt horizontal angeordneten Röhren. Das sauerstoffreiche, saubere Atemwasser strömt in jedem Falle von dem vorderen Kopfende der Röhren zu dem hinteren oder unteren verengten Röhrenende. Die Verengungen sind dabei so gehalten, daß Exkremente und Futterreste die Röhren am hinteren oder rückwärtigen Ende verlassen können, die Wasserorganismen jedoch festgehalten werden.

Der Trägerboden kann beispielsweise in dem Wasser schwimmen oder an der Behältniswand festgemacht sein. Die Größe des Trägerbodens ist dabei beliebig und hängt von der Handhabung ab. Auch können Trägerboden mit verschiedenen Röhrengrößen bereitgehalten werden für die verschiedenen Aufzuchtstadien der Aale, Krebse oder anderen aufzuziehenden Wasserorganismen.

Die Aale werden meist in schräger Lage kopfoben in den Röhren stehen, während die Krebse sich normalerweise in den horizontalen Röhren verkriechen werden. In beiden Fällen entspricht diese Ruhelage den Lebensgewohnheiten der Tiere, so daß eine tiergerechte Aufzucht möglich ist.

Insbesondere Krebse und Aale, aber auch andere höhlen- und bodenbewohnende Wasserorganismen, lassen sich bevorzugt in warmem Wasser aufziehen. Dies bedeutet in nördlicheren Breiten eine Bereitstellung von warmem Aufzuchtwasser. Dies ist durch eine Aufwärmung des Aufzuchtwassers möglich. Besondere Bedeutung kommt dabei aber warmem Abwasser zu, das bei verschiedenen Industrien ständig zur Verfügung steht. Von diesem Abwasser gibt es, abgesehen von ganz sauberem Wasser, zwei verschieden zu wertende Arten. Das eine Abwasser ist zwar schmutzig, aber der Schmutzanteil ist von solcher Art, daß es ohne weiteres möglich ist, einen Schmutzwassertrakt damit unmittelbar zu speisen. In diesem Fall kann der Trägerboden lediglich aus einer Platte bestehen, an der die Schlupfaufnahmen mit ihren oberen bzw. vorderen Enden münden und befestigt sind. Die Röhrenwandungen ragen dann in den Schmutzwassertrakt hinein, wobei das Schmutzwasser die Röhren umspült und im gewünschten Ausmaß erwärmt.

Es gibt aber auch warmes Abwasser, das so verschmutzt ist, daß es nicht einmal zum Absaugen von Kot und Futterresten geeignet ist, da Schadstoffe auch in das Aufzuchtwasser hinein diffundieren könnten. In diesem Fall besteht der Trägerboden aus einem Hohlkörper, den die Schlupfaufnahmen durchsetzen. Dieses Schmutzwasser dient damit nur zum Erwärmen der Schlupfaufnahmen und verläßt die Vorrichtung, ohne mit Frischwasser oder Schmutzwasser im Schmutzwassertrakt in Berührung zu kommen.

Die Vorrichtung wird mit einem Druckgefälle betrieben, wobei vorzugsweise das Frischwasser so eingebracht wird, daß es einen Überdruck gegenüber dem Schmutzwassertrakt ausbildet. Das Niveau des Frischwassers sollte daher höher liegen als das Niveau des Wassers im Schmutzwassertrakt. Die Erfindung wird anhand der in den Zeichnungen dargestellten Ausführungsbeispiele näher erläutert. Es zeigen.

Fig.1 eine Vorrichtung zur Aalhaltung mit einer geneigten Schlupfröhre,

Fig. 2 eine Aalaufzuchtvorrichtung nach Fig. 1,

Fig. 3 eine Vorrichtung zum Aufziehen von Krebsen,

Fig. 4 eine Draufsicht auf eine Vorrichtung zum Aufziehen von Krebsen nach Fig. 3 in einem Ausschnitt,

Fig. 5 eine Ausführungsform der Aalaufziehvorrichtung mit einem als Massivkörper ausgebildeten Trägerboden,

Fig. 6 eine Aufzuchtvorrichtung für Aale mit Zuführung von Schmutzwasser zum Schmutzwassertrakt, welches aufgrund seiner Verunreinigungen zum Absaugen von Futterresten und Kot geeignet ist, und

Fig. 7 eine Vorrichtung zum Aufziehen von Aalen, wobei das zum Erwärmen der Schlupfrohre eingesetzte Schmutzwasser derart verunreinigt ist, daß es selbst zum Abführen von Futterresten und Kot nicht mehr geeignet ist.

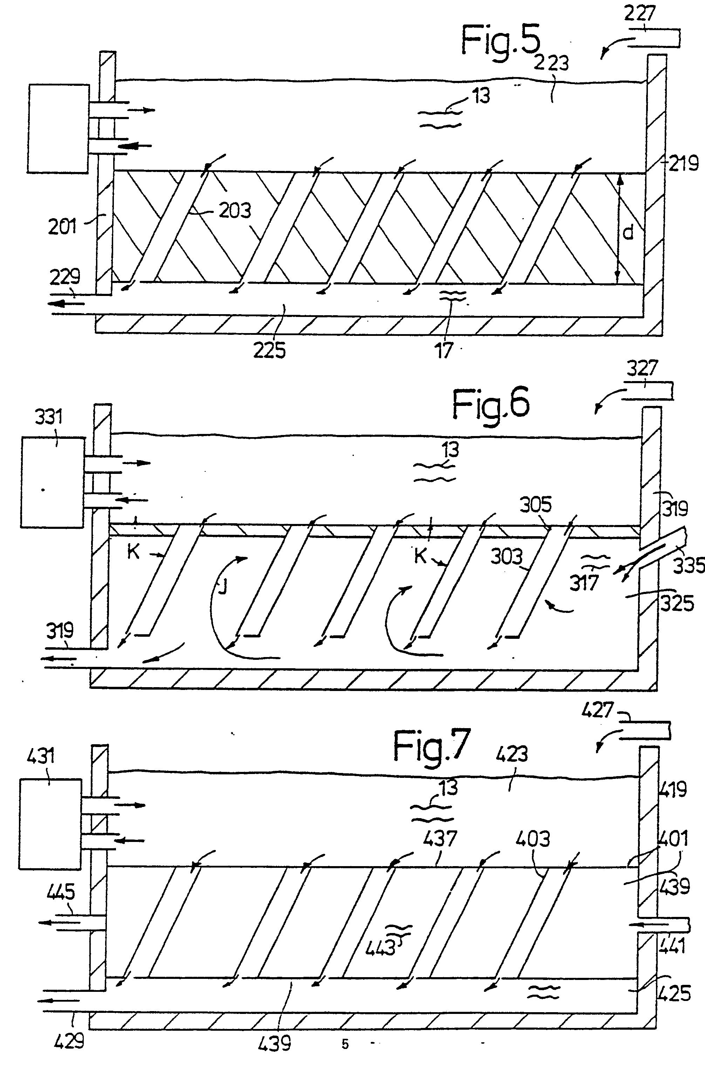

In Fig. 7 ist das Prinzip der Vorrichtung zum Aufziehen von Aalen oder anderen bodenbewohnenden Wasserorganismen dargestellt, die die Neigung oder die Gewohnheit haben, sich in Röhren aufzuhalten. Die Vorrichtung besteht aus einem Trägerboden 1, in dem eine große Anzahl von Schlupfröhren 3 befestigt ist. Die Schlupfröhren sind unter einem sich als jeweils zweckmäßig ergebender Winkel ($\alpha = 0\text{-}90$) gegenüber dem horisontalen Trägerboden 1 an ihren Kopfenden 5 festgelegt. Die rückwärtigen Enden 7 sind durch ein Umbiegen eines Randteiles 9 oder dergl. derart verengt, daß wohl Flüssigkeit sowie Futterreste und Exkremente durch die verbliebene Öffnung 11 abgezogen werden können, ein Aal 12 Sedoch nicht entweichen kann.

Die Haltung der Aale erfolgt in der Weise, daß oberhalb des Trägerbodens 1 Frischwasser 13 zugeführt wird. Dieses Frischwasser stromt in Richtung eines angedeuteten Pfeiles 75 durch die Schlupfröhre 3 und verläßt diese unterhalb des Trägerbodens 1 an der Öffnung 11, indem beispielsweise das Wasser 17 unterhalb des Trägerbodens 1 unter einen gewissen Unterdruck gesetzt wird. Kotausscheidungsprodukte und mit anderen so durch die Öffnung 11 entfernt. Dem Aal 12 steht damit immer sauberes Atemwasser zur Verfügung.

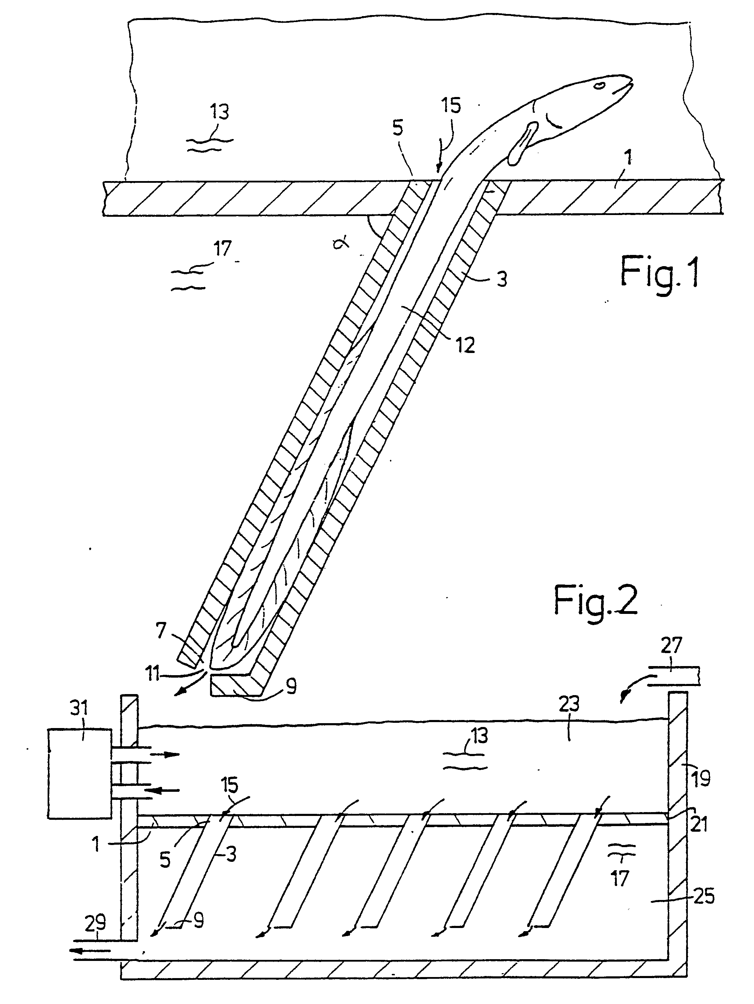

In Fig. 2 ist ein Behältnis 19 dargestellt, in dem sich ein Trägerboden 1 befindet. Dieser Trägerboden 1 schließt mit seinen Rändern 21 unmittelbar an dem Behältnis 19 an, so daß sich oberhalb des Trägerbodens 1 ein Frischwassertrakt 23 mit Frischwasser 13 ausbildet, während unterhalb des Trägerbodens ein Schmutzwassertrakt 25 mit dem Schmutzwasser 17 vorgesehen ist. Das Frischwasser 13 wird über einen Einlaß 27 eingegeben. Da das Schmutzwasser über einen Kanal 29 abgeleitet wird, entsteht ein Sog, der das Frischwasser durch die Schlupfrohre 3 hindurchströmen läßt. Zusätzlich ist noch ein Wasserzirkulator 31 vorgesehen, der das Wasser im Frischwassertrakt 23 in Umlauf setzt und belüftet.

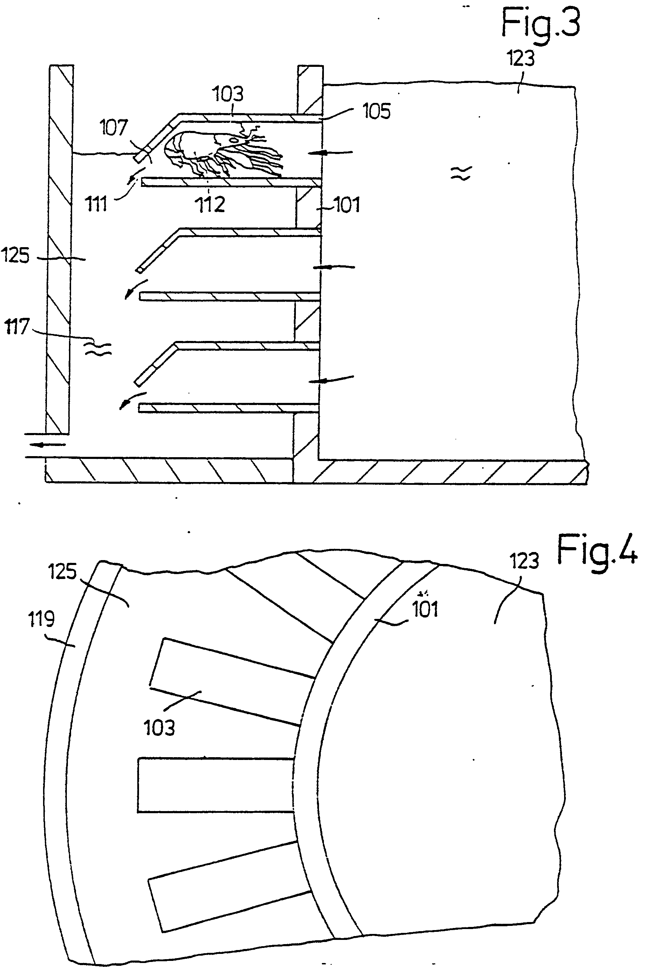

Als Beispiel für die Aufzuchtmöglichkeit auch für andere bodenbewohnende Wasserorganismen ist in Fig. 3 eine Vorrichtung zur Aufzucht von Krebsen dargestellt. Es ist ein Trägerboden 101 vorgesehen, in den Schlupfrohre 103 eingesetzt sind. Die Schlupfrohre 103 sind mit ihren Kopfenden 105 im Trägerboden 101 festgelegt und münden offen im Frischwassertrakt 123. Die rüchwärtigen Enden der Schlupfrohre 103 sind so verengt, daß durch sie zwar verschmutztes Wasser mit Kot und Futterresten abgeleitet werden kann, daß aber in den Schlupfrohren einsitzende Krebse 112 die Schlupfrohre nicht verlassen können. Das durch Kot und Futterreste verschmutzte Frischwasser verläßt die Schlupfrohre 103 an der Öffnung 111, weil das Wasser 117 im Schmutzwassertrakt 125 unter Unterdruck steht. Damit durchfließt die Schlupfrohre 103 ständig Frischwasser, und die Krebse 112 in den Schlupfrohren 103 leben in einer ihrer Lebensgewohnheit entsprechenden, für sie angenehmen Umgebung.

In Fig. 4 ist anhand einer Draufsicht ein Beispiel einer Vorrichtung zur Aufzucht von Edelkrebsen oder Signalkrebsen angegeben. Der Trägerboden 101 ist dabei als Rohr ausgebildet, und der Frischwassertrakt 123 befindet sich in seinem Inneren. Die Schlupfrohre 103 erstrecken sich von dem rohrförmigen Trägerboden 101 nach außen in den Schmutzwassertrakt 125, der von einem rohrförmigen Mantel 119 umgeben ist. Selbstverständlich sind auch andere Aufbauformen der Vorrichtung zum Aufziehen von Krebsen denkbar.

Fig. 5 zeigt eine Variante der Vorrichtung zum Aufziehen von Aalen mit einem Trägerboden 201, der als Massivboden, beispielsweise in Schaumkunststoff, ausgebildet sein kann. Dieser Trägerboden 201 hat eine Dicke d, die so bemessen ist, daß in dem Trägerboden 201 die Schlupfröhren 3 für Aale, wie sie in Fig. 1 dargestellt sind, in voller Länge aufgenommen werden.

Der Trägerboden 201 befindet sich in einem Wasserbehältnis 219, in das oberhalb des Trägerbodens 201 über eine Leitung 227 Frischwasser 13 zugeführt wird. Dabei bildet sich oberhalb des Trägerbodens 201 wieder ein Frischwassertrakt 223 und unterhalb des Trägerbodens 201 ein Schmutzwassertrakt 225 aus. Das durch die Schlupfrohre 203 hindurchströmende Frischwasser wird in den Schmutzwassertrakt 225 abgesaugt und nimmt dabei Verunreinigungen, wie Kot und Futterreste, mit. Der Unterdruck im Schmutzwassertrakt 225 kann dadurch entstehen, daß das Schmutzwasser 17 über einen Stutzen 229 aus der Vorrichtung abgesaugt wird.

In der Industrie stehen häufig warme Abwasser zur Verfügung, die ungenutzt in Abflußleitungen eingeleitet werden. In nördlicheren Breiten ist das normale Frischwasser relativ kalt und in seiner Temperatur deshalb den aufzuziehenden Aalen, Krebsen oder anderen in warmen Regionen lebenden bodenbewohnenden Organismen nicht optimal, so daß z.B. das Abwachsen langsamer erfolgt als im Temperaturoptimum. Es ist möglich, warmes Industrieabwasser einzusetzen, um damit sowohl das Frischwasser als auch die Schlupfröhren in eine den Tieren angenehme Temperaturlage zu bringen. In Fig. 6 ist ein Ausführungsbeispiel dargestellt, das den Einsatz von warmen Industrieabwässern vorsieht, wobei dieses warme Industrieabwasser zwar nicht als Frischwasser geeignet ist, Sedoch zum Abführen von Exkrementen, Futterresten oder anderweitigen Verschmutzungen durchaus geeignet ist. In einem solchen Fall befindet sich innerhalb des Wasserbehältnisses 319 ein Trägerboden 301, der ebenso wie der Trägerboden 1 in den Fig. 1 und 2 ausgebildet ist. Am Trägerboden 301 sind also Schlupfrohre 303 mit ihren Kopfstücken 305 in geneigter Lage befestigt. Oberhalb des Trägerbodens 301 befindet sich Frischwasser 13, das in einem Zirkulator 331 umgewälzt wird. Die Frischwasserzufuhr erfolgt über ein Einlaßrohr 327.

In den Schmutzwassertrakt 325 wird über einen getrennten Zulauf 335 Schmutzwasser 317 eingeführt. Dieses Schmutzwasser ist ein warmes Industrieabwasser, das beispielsweise aus Molkereien oder dergl. herangeführt wird. Dieses warme Industrieabwasser erwärmt den Trägerboden 301 und über ihn das Frischwasser 13 sowie die Schlupfrohre 303. Der Wärmeübergang ist durch Pfeile K angedeutet. Damit wird die ganze Vorrichtung zum Aufziehen von Aalen, was gleicherweise natürlich auch bei der Aufzucht von Krebsen möglich ist, auf eine den Tieren optimale Wassertemperatur gebracht.

Das Schmutzwasser wird, wie bei den zuvor beschriebenen Vorrichtungen, über einen Schmutzwasseranschluß 319 abgesaugt. oder abgeleitet. Die Zirkulation des eingeführten warmen Schmutzwassers innerhalb des Schmutzwassertraktes ist durch Pfeile J angedeutet.

Das bei der Vorrichtung nach Fig. 6 zum Einsatz gebrachte Schmutzwasser hat einen Verschmutzungsgrad, der es möglich macht, das Schmutzwasser zusammen mit den Exkrementen einer normalen Klärreinigung zu unterwerfen. Es gibt Sedoch auch warmes Schmutzwasser, das derart verunreinigt ist, daß es an sich mit Fischen oder einer Fischaufzucht überhaupt nicht in Berührung gebracht werden kann. Solches Schmutzwasser kann in der Vorrichtung nach Fig. 7 dennoch eingesetzt werden. In diesem Fall ist in dem Wasserbehältnis 419 ein Trägerboden 401 angeordnet, durch den sich von der Frischwasserseite 437 zur Schmutzwasserseite 439 die Schlupfröhren 403 in der bereits zuvor beschriebenen Schräglage erstrecken. Über ein Zuflußrohr 427 fließt Frischwasser 13 in den Frischwassertrakt 423. Ein Zirkulator 431 sorgt für die Umwälzung des Frischwassers im Frischwassertrakt 423. Unterhalb des Trägerbodens 401 befindet sich der Schmutzwassertrakt 425, der an einen Abflußsaugstutzen 429 angeschlossen ist. Das Frischwasser 13 durchströmt damit von oben nach unten wieder die Schlupfrohre 403 und nimmt Exkremente, Futterreste und andere Verschmutzungen in den Schmutzwassertrakt 425 mit, aus dem sie über die Saugleitung 429 abgeführt werden. Der Innenraum 439 des Trägerbodens 401 ist an eine Schmutzwasserleitung 441 angeschlossen. Über diese Schmutzwasserleitung 441 strömt warmes, für Fische Sedoch völlig ungeeignetes Schmutzwasser in den Innenraum 439, der damit erwärmt wird. Das für Fische unbrauchbare Schmutzwasser 443 verläßt den Trägerboden 401 über einen Abfluß 445.

## Patentansprüche

1. Vorrichtung zur Aufzucht von bodenbewohnenden Wasserorganismen (12, 112) mit einem die Wasserorganismen aufnehmenden, mit Wasser angefüllten Behälter, oberhalb dessen Boden Schlupfaufnahmen (3, 103, 203, 303, 403) vorgesehen sind, in die an ihren Kopfenden Frischwasser einströmt und die an ihren rückwärtigen Enden mit das Entweichen der Wasserorganismen (12, 112) verhindernden baulichen Anordnungen versehen sind, dadurch gekennzeichnet, daß die Schlupfaufnahmen (3, 103, 203, 303, 403), die rohrförmig oder dergl. ausgebildet sind, mit ihren Kopfenden an einen Trägerboden (1, 101, 201, 401) münden und befestigt sind, der innerhalb des Behälters einen Frischwassertrakt (23, 123, 223, 423) von einem Schmutzwassertrakt (25, 125, 225, 325, 425) trennt, womit die Schlupfaufnahmen (3, 103, 203 303, 403) unmittelbar von der vom Frischwasser versorgten Seite des Trägerbodens (1, 101, 201, 401) aus in das Wasser des Schmutzwassertraktes (25, 125, 225, 325, 425) geführt sind, und daß die schmutzwasserseitigen Enden der einzelnen Schlupfaufnahmen (3, 103, 203, 303, 403) zum Verhindern des Entweichens der Wasserorganismen (12, 112) mit Verengungen versehen sind.

2. Vorrichtung nach Anspruch 1, dadurch gekennzeichnet, daß sich die rohrförmigen Schlupfaufnahmen (3, 203, 303, 403) für Aale aus dem Schmutzwassertrakt schräg nach oben zu dem oberhalb des horizontalen Trägerbodens (1, 201, 401) gelegenen Frischwassertrakt (23, 123, 223, 423) erstrecken, womit Schmutzwassertrakt und Frischwassertrakt übereinander angeordnet sind.

3. Vorrichtung nach Anspruch 1, dadurch gekennzeichnet, daß die Schlupfaufnahmen für Krebse aus horizontal an einem vertikalen Trägerboden (101) angeordneten Röhren (103) bestehen, womit Schmutzwassertrakt und Frischwassertrakt nur vom Trägerbogen getrennt nebeneinander angeordnet sind.

4. Vorrichtung nach einem der vorhergehenden Ansprüche, dadurch gekennzeichnet, daß der Trägerboden (1, 201) aus einer Platte besteht.

5. Vorrichtung nach einem der Ansprüche 1 bis 3, dadurch gekennzeichnet, daß der Trägerboden (201) aus einem Massivkörper besteht, den die Schlupfaufnahmen (203) durchsetzen.

6. Vorrichtung nach einem der Ansprüche 1 bis 3, dadurch gekennzeichnet, daß der Schmutzwassertrakt (325) mit Warmwasserzufluß (335) versehen, von warmem Wasser durchströmbar ist.

7. Vorrichtung nach einem der Ansprüche 1 bis 3, dadurch gekennzeichnet, daß der Trägerboden aus einem Hohlkörper (401) besteht, den die Schlupfaufnahmen (403) durchsetzen.

8. Vorrichtung nach Anspruch 7, dadurch gekennzeichnet, daß der Trägerboden (401) mit Warmwasserzufluß (441) und -abfluß (445) versehen von warmem Wasser durchströmbar ist.

## Claims

1. Apparatus for raising bottom-living marine organisms (12, 122) comprising a water-filled container receiving said marine organisms above said bottom receptacles (3, 103, 203, 303, 403) are provided having fresh water flowing in at their head ends and having structures at their rear ends to prevent the escape of said marine organisms (12, 112), characterized in that the receptacles (3, 103, 203, 303, 403) being of tubular form or suchlike extend to and being secured to a supporting base at their head ends the supporting base within the container separating a freshwater section (23, 123, 223, 423) from a dirty-water section (25, 125, 225, 325, 425) whereby the receptacles (3, 103, 203, 303, 403) are let immediately from the side of the supporting base being supplied with fresh water (1, 101, 201, 401) into the water of the dirty-water section (25, 125, 225, 325, 425) and that the ends of the single receptacles (3, 103, 203, 303, 403) towards the side of the dirty-water are provided with constrictions in order to prevent the escape of said marine organisms (12, 112).

2. Apparatus according to claim 1,
<u>characterized in that</u>
the tubular receptacles (3, 203, 303, 403) suitable for eels extend upwardly from the dirty-water section at an angle towards the freshwater section (23, 123, 223, 423) located above the horizontal supporting base (1, 201, 401) whereby the dirty-water section and the freshwater section are arranged one above the other.

3. Apparatus according to claim 1,
<u>characterized in that</u>
the receptacles suitable for crayfish consist of tubes (103) being horizontally secured to a vertical supporting base (101) whereby the dirty-water section and the freshwater-section are arranged one beside the other and only separated by the supporting base.

4. Apparatus according to any of the preceding claims,
<u>characterized in that</u>
the supporting base (1, 201) consists of a plate.

5. Apparatus according to any of the claims 1 to 3,
<u>characterized in that</u>
the supporting base (201) consists of a solid body through which the receptacles (203) extend.

6. Apparatus according to any of the claims 1 to 3,
<u>characterized in that</u>
the dirty-water section (325) is provided with a warm-water inlet (335) and is adapted to have warm water flow therethrough.

7. Apparatus according to any of the claims 1 to 3,
<u>characterized in that</u>
the supporting base consists of a hollow body (401) through which the receptacles (403) extend.

8. Apparatus according to claim 7,
<u>characterized in that</u>
the supporting base (401) is provided with a warmwater inlet (441) and with a warm-water outlet (445) and is adapted to have warm water flow therethrough.

**Revendications**

1. Dispositif pour élever des organismes aquatiques (12, 112) vivant au fond de l'eau, comprenant un récipient de réception des organismes aquatiques, qui est empli d'eau et au-dessus du fond duquel sont prévus des habitacles (3, 103, 203, 303, 403), dans lesquels les organismes aquatiques peuvent se glisser, par les extrémités de tête desquels entre de l'eau fraîche et dont les extrémités postérieures sont munies d'agencements empéchant les organismes aquatiques (12, 112) de s'échapper, caractérisé en ce que les habitacles (3, 103, 203, 303, 403) ont une forme tubulaire ou une forme semblable, débouchent et sont fixés par leur extrémité de tête sur un fond-support (1, 101, 201, 401) qui, à l'intérieur du récipient, sépare un secteur pour de l'eau fraîche (23, 123, 223, 423) d'un secteur pour de l'eau souillée (25, 125, 225, 325, 425), les habitacles (3, 103, 203, 403) allant directement du côté du fond-support (1, 101, 201, 401), qui est alimenté en eau fraîche, dans l'eau du secteur pour de l'eau souillée (25, 125, 225, 325, 425), et en ce que les extrémités des habitacles individuels (3, 103, 203, 303, 403), qui sont du côté de l'eau souillée, sont munies d'étranglements pour empêcher les organismes aquatiques (12, 112) de s'échapper.

2. Dispositif suivant la revendication 1, caractérisé en ce que les habitacles (3, 203, 303, 403), de forme tubulaire pour des anguilles, s'étendent, obliquement vers le haut, du secteur pourde l'eau souillée disposé au-dessus du fond support (1, 201, 401) horizontal, le secteur pour de l'eausouillée et le secteur pour de l'eau fraîche étant disposés l'un au-dessus de l'autre.

3. Dispositif suivant la revendication 1, caractérisé en ce que les habitacles pour des crustacés sont constitués de tubes (103) disposés horizontalement sur un fond-support (101) vertical, le secteur pour de l'eau souillée et le secteur pour de l'eau fraiche étant disposés l'un à côté de l'autre,en étant séparés que par le fond-support.

4. Dispositif suivant l'une des revendications précédentes, caractérisé en ce que le fond-support (1, 201) est constitué d'une plaque.

5. Dispositif suivant les revendications 1 à 3, caractérisé en ce que le fond-support (201) est constitué d'un corps plein traversé par les habitacles (203).

6. Dispositif suivant l'une des revendications 1 à 3, caractérisé en ce que le secteur pour de l'eau souillée (325) et muni d'une arrivée d'eau tiède (335), peut être parcouru par de l'eau tiède.

7. Dispositif suivant l'une des revendications 1 à 3, caractérisé en ce que le fond-support est constitué d'un corps creux (401) traversé par les habitacles (403).

8. Dispositif suivant la revendication 7, caractérisé en ce que le fond-support (401), muni d'une arrivée (441) et de sortie (445) d'eau tiède, peut être parcouru par de l'eau tiède.

Fig.1

Fig.2

Fig.3

Fig.4

Fig.5

Fig.6

Fig.7